# EUROPÄISCHE PATENTSCHRIFT

(11) **EP 2 030 502 B1**
(45) Veröffentlichungstag und Bekanntmachung des Hinweises auf die Patenterteilung: **25.06.2014**
(21) Anmeldenummer: 08163364.6
(22) Anmeldetag: 01.09.2008
(51) Int. Cl.: A01F 15/07, A01F 15/08

(54) **Rundballenpresse mit aufklappbarer variabler Ballenkammer**
Round baling press with collapsible variable baling chamber
Presse à ballots ronds dotée d'une chambre à ballots relevable variable

(30) Priorität: 03.09.2007 DE 102007041634; 27.11.2007 DE 202007016641 U
(43) Veröffentlichungstag der Anmeldung: 04.03.2009
(73) Patentinhaber: Schütte, Thomas, 48488 Emsbüren-Gleesen (DE)
(72) Erfinder: Schütte, Thomas, 48488 Emsbüren-Gleesen (DE)
(74) Vertreter: Michalski Hüttermann & Partner Patentanwälte

(56) Entgegenhaltungen:
- DE-A1- 2 634 638
- DE-A1-102005 020 777
- US-A- 4 510 861
- US-A- 4 625 502
- US-A- 4 667 592

## Beschreibung

Die vorliegende Erfindung betrifft eine Rundballenpresse mit aufklappbarer variabler Ballenkammer mit mindestens zwei getrennt voneinander umlaufenden Führungen und beweglichen Stellmitteln zum Pressen von landwirtschaftlichem Erntegut zu Rundballen mit wählbarem Ballendurchmesser, einer Bindeeinrichtung zum Binden der gepressten Rundballen und einer der Ballenkammer vorgeschalteten Erntegutaufnahmeeinrichtung zum Aufnehmen des Erntegutes sowie ein Verfahren zum Pressen von Rundballen mit der beanspruchten Rundballenpresse.

Rundballenpressen sind als Festkammerpressen und als variable Ballenpressen sowohl im landwirtschaftlichen als auch in industriellen Bereichen, wie beispielweise im Müllentsorgungsbereich bekannt. Insbesondere bei der landwirtschaftlichen Nutzung sind die Ballenpressen mobil hinter ein Schlepp- oder Zugfahrzeug zu spannen und werden über eine Antriebswelle vom Schlepp- oder Zugfahrzeug angetrieben. Im Fahrbetrieb werden die bekannten Pressen über das zu bestellende Feld gezogen, um über eine Erntegutaufnahmeeinrichtung das zu ballende Erntegut aufzunehmen. Dabei lassen sich mit den bekannten Festkammerpressen Erntegut-Rundballen mit vorbestimmten Ballendurchmessern pressen, wohingegen sich mit den variablen Pressen Erntegut-Rundballen mit einstellbaren Durchmessern pressen lassen.

So ist beispielsweise aus der DE 196 06 230 A1 eine fahrbare Wickelpresse bekannt, wobei es sich hier um eine Festkammerpresse handelt, die sich aus einer kleineren vorderen und einer größeren hinteren Presskammer zusammensetzt, wobei die Wickelpresse zum Trennen und Verbinden der beiden Kammern mit einem unteren und einem oberen Schwenksystem ausgestattet ist, wobei das obere Schwenksystem aus zwei großen Presswalzen besteht, die an einem Rahmen drehbar befestigt sind.

Aus der DE 10 2005 020 777 A1 ist eine kontinuierliche Rollenballenpresse für besonders feste Ballen beschrieben, die in Tandemanordnung einer Vor- und einer Hauptkammer gebaut ist, die durch eine um eine Achse drehbar gelagerte Trenneinheit voneinander trennbar und miteinander verbindbar sind. Der Übergang eines Ballens aus der Vorkammer in die Hauptkammer wird über die Pressdichte des als Vorballen in der Vorkammer gebildeten Ballens reguliert.

Auch aus der EP 0 148 519 A1 ist eine kontinuierliche Rundballenpresse bekannt, die in einem Zweikammerprinzip arbeitet, wobei eine zweite Kammer durch die spezielle Ausgestaltung der oberen und der unteren Führung innerhalb der ersten Kammer ausgebildet werden.

Die DE 10 2004 023 696 B4 beschreibt eine Ballenformeinrichtung mit beweglichen Stellmitteln, über die der einstellbare maximale Ballendurchmesser wählbar ist.

Die in der DE 26 34 638 A1 offenbarte Erfindung betrifft eine Rundballenpresse zum Bilden von Großballen in einem Wickelraum mit einer Einrichtung zum Umschlingen des fertigen Ballens, wobei der Wickelraum an dem der Fahrtrichtung entgegensetzten Ende der Großballenpresse geöffnet, bzw. geschlossen werden kann, dadurch gekennzeichnet, dass dem Wickelraum ein Gutspeicherraum vorgeordnet ist.

Bei den bekannten Rundballenpressen ist nachteilig, dass sich die Rundballen nicht in einem gradlinigen Prozess von der Ernteaufnahme bis zur Erstellung eines Rundballens herstellen lassen. Vielmehr wird versucht, die Produktion der Rundballen kontinuierlich in einer Zweikammerpresse zu ermöglichen. Allerdings sind dafür konstruktiv aufwändige Mittel vorgeschlagen, so zum Beispiel die aus der DE 10 2005 020 777 A1 bekannte Trenneinrichtung oder die aufwändig geführten Führungen, die aus der EP 0 148 519 A1 bekannt sind. Diese aufwändige Ausgestaltung macht die bekannten Rundballenpressen relativ teuer und zudem extrem störanfällig, oder sind, wie die in der DE 10 2004 023 696 B4 beschriebenen als Rundballenpresse nicht für den kontinuierlichen Einsatz geeignet. Das heißt, der Schlepper oder das Zugfahrzeug müssen nach Beendigung des Pressvorgangs für den Bindevorgang und das Auswerfen des Rundballens stehenbleiben, was ca. 1 min in Anspruch nimmt, wodurch zum einen die Bestellung eines Feldes relativ viel Zeit benötigt, und zum anderen wird durch das Stoppen und Anfahren des Schleppers oder der Zugmaschine im Vergleich zu einem kontinuierlichen Bestellen eines Feldes, dass heißt ohne Stopp- und Anfahrvorgänge des Schleppers oder der Zugmaschine, mehr Kraftstoff verbraucht.

Es ist die Aufgabe der vorliegenden Erfindung, eine Rundballenpresse mit aufklappbarer variabler Ballenkammer der eingangs genannten Art zur Verfügung zu stellen, die durch ihre konstruktive Ausgestaltung unter Verwendung etablierter und kostengünstiger Technik die Bestellung eines Feldes, dass heißt von der Erntgutaufnahme bis zum Auswerfen eines Erntegutballens, in einem gradlinigen Prozess ermöglicht. Zudem ist es die Aufgabe der vorliegenden Erfindung, ein Verfahren unter Verwendung der beanspruchten Rundballenpresse anzugeben, dass durch Abstimmung der aufeinander folgenden Arbeitsschritte einen gradlinigen Prozess von der Aufnahme des Erntegutes bis zum Auswurf des gebundenen Ballens ermöglicht.

Erfindungsgemäß wird die voranstehende Aufgabe hinsichtlich einer Rundballenpresse mit aufklappbarer variabler Ballenkammer mit den Merkmalen des Anspruchs 1 gelöst. Danach ist die Rundballenpresse mit aufklappbarer variabler Ballenkammer der eingangs genannten Art derart ausgestaltet, dass der aufklappbaren variablen Ballenkammer mindestens eine weitere aufklappbare variable Ballenkammer mit mindestens zwei getrennt voneinander umlaufenden Führungen und beweglichen Stellmitteln vorgeschaltet ist, die der Erntegutaufnahmeeinrichtung nachgeschaltet ist, die zum einen Erntegut durch Gleichlauf der Führungen an die nachgeschaltete Ballenkammer durchleitet, und die zum anderen durch Drehrichtungsänderung einer der mindestens zwei Führungen Erntegut in die Ballenkammer einleitet und dieses zu einem Vorballen dreht, und die den Vorballen nach Beendigung des Pressens, des Bindens und Auswurfes eines Rundballens aus der nachgeschalteten Kammer durch Gleichlauf der Führungen beider Ballenkammern oder alternativ, wie nach Anspruch 2, durch Drehzahlreduzierung oder Drehzahlerhöhung einer der mindestens zwei Führungen beider Ballenkammern oder nur durch Drehzahlreduzierung oder Drehzahlerhöhung einer der mindestens zwei Führungen und Aufklappen der Kammern zueinander an die nachgeschaltete Ballenkammer übergibt.

Der Begriff "aufklappbare Ballenkammer" ist dabei auch so zu verstehen, dass durch Nachlassen der Spannung von Ketten, Riemen oder anderen Führungsmitteln der Ballenkammer nach dem Press- oder Bindevorgang, die Ballenkammern zur Aufnahme oder zur Abgabe eines Ballens bereitstehen.

Mit der gemäß Anspruch 1 oder Anspruch 2 beanspruchten variablen Ballenkammer ist ein gradliniger Prozess zum Pressen von Rundballen der eingangs genannten Art möglich, bei dem die vorgeschaltete variable Ballenkammer, die der Erntegutaufnahme nachgeschaltet ist, in sich wiederholender Reihenfolge in einem
- ersten Schritt bei geschlossenen Kammern Erntegut durch Gleichlauf der Führungen an die nachgeschaltete Ballenkammer durchleitet, in einem
- zweiten Schritt nach Befüllung der nachgeschalteten Ballenkammer mit Erntegut durch Drehrichtungsänderung einer der mindestens zwei Führungen Erntegut in der Kammer aufnimmt und dieses zu einem Vorballen dreht, und in einem
- dritten Schritt den Vorballen nach Beendigung des Pressens, des Bindens, Aufklappens und Auswurfes eines Rundballens aus der nachgeschalteten Ballenkammer durch Gleichlauf und Drehzahländerung der Führungen beider Ballenkammern oder durch Drehzahlreduzierung oder Drehzahlerhöhung einer der mindestens zwei Führungen beider Ballenkammern oder nur durch Drehzahlreduzierung oder Drehzahlerhöhung einer der mindestens zwei Führungen und zueinander Aufklappen der Ballenkammern an die nachgeschaltete Kammer übergibt,
   und zurückkehrend zum ersten Schritt bei geschlossenen Ballenkammern das Erntegut unter Beibehaltung der Laufrichtung und unter Drehzahländerung oder durch Gleichrichtung der Laufrichtung der Führungen an die nachgeschaltete Ballenkammer durchleitet, die durch Drehrichtungsänderung einer der mindestens zwei Führungen oder unter Beibehaltung der gegenläufigen Drehrichtung der Führungen, den Vorballen bis zum durch die Stellmittel vorgewählten Ballendurchmesser formt, presst und unter Beibehaltung der gegenläufigen Drehrichtung der Führungen mit Garn oder einem Netz umbindet.

In erfindungsgemäßer Weise ist erkannt worden, dass durch Aneinanderreihung von zwei variablen und zueinander aufklappbaren Ballenkammern, die jeweils mindestens zwei getrennt voneinander umlaufende Führungen aufweisen und die einer Erntegutaufnahmeeinrichtung nachgeschaltet sind, das Aufsammeln von Erntegut und das Drehen, Pressen und Binden des Ernteguts zu Erntegutballen mit variablen Durchmesser in einem kontinuierlichen und gradlinigen Prozess erfolgen kann.

Folglich ist eine Rundballenpresse mit aufklappbarer variabler Ballenkammer zur Verfügung gestellt, die durch ihre konstruktive Ausgestaltung unter Verwendung etablierter und kostengünstiger Technik die Bestellung eines Feldes, das heißt von der Erntegutaufnahme bis zum Auswerfen eines Erntegutballens, in einem gradlinigen Prozess ermöglicht.

Vorzugsweise ist die Drehzahl der Führungen beider Kammern getrennt voneinander regelbar. Es ist also möglich, die durch die Antriebswelle des Schleppers vorgegebene Drehzahl unabhängig von einer Drehzahländerung der Antriebswelle für die Führungen so zu reduzieren oder zu steigern, wie es für einen gradlinigen Verlauf notwendig ist. So laufen die Führungen der Kammern beispielsweise beim Wickeln der Ballen oder beim Durchführen von Erntegut mit einer höheren Drehzahl als bei der Übergabe eines Vorballens aus der vorgeschalteten Kammer an die nachgeschaltete Ballenkammer. Auch der Auswurf des Rundballens sollte bei einer geringeren Drehzahl der Führungen der nachgeschalteten Ballenkammer erfolgen, wobei diese vorzugsweise gleich der Drehzahl der Führungen bei der Übergabe eines Vorballens sein sollte.

Da die vorliegende Erfindung unter Verwendung von für Rundballenpressen etablierter Technik ausführbar sein soll, lassen sich sowohl bekannte Stabkettenelevatoren, Endlos-Gummibänder, Walzen und Riemen als Führungen für die Vor- als auch für die nachgeschaltete Kammer verwenden. Da die Führungen der beiden Kammern getrennt voneinander regelbar sind und getrennt voneinander laufen, dass heißt in zwei Kammern, ist es auch möglich eine Kombination aus beispielsweise aus Stabkettenelevatoren bestehenden Führungen für die nachgeschaltete Kammer und aus Endlos-Gummibändern bestehenden Führungen für die vorgeschaltete Kammer zu wählen. Die als Endlos-Gummibänder ausgestalteten Führungen der vorgeschalteten Ballenkammer fördern im Gegensatz zu den bekannten Stabkettenelevatoren das Erntegut besser in die nachgeschaltete Ballenkammer, wohingegen aus Stabkettenelevatoren bestehende Führungen der nachgeschalteten Ballenkammer gegenüber Riemen oder Gummibändern Verschleiß unanfälliger sind.

Um die Drehrichtung und Drehzahl der Führungen getrennt voneinander regeln zu können, sind diese mit der Antriebswelle des Schleppers oder Zugfahrzeuges über Hydraulikmotoren oder mechanische, elektrische oder pneumatische Getriebe gekoppelt. Besonders bevorzugt ist hierbei die Verwendung von Hydraulikmotoren, da diese durch ihre aufgelöste Bauweise optimal konstruktiv an die Raumvorgaben einer variablen Rundballenpresse anpassbar sind, eine stufenlose Geschwindigkeitsstellung des Abtriebes in sehr weiten Grenzen und eine einfache Umkehr der Bewegungsrichtung mit diesen möglich ist. Zudem ermöglicht die Verwendung von Hydraulikmotoren bei vergleichsweise kleinen Bauelementen eine große Leistungsentfaltung, insbesondere im Vergleich zu Elektroantrieben. Auch können beide über einen Hydromotor getrennt voneinander angetriebenen Führungen der Ballenkammern mit einem Primärteil, welches eine Pumpe darstellt, verbunden sein, woraus sich die Wirkung eines Differentials erzeugen lässt und sich der konstruktive Aufwand der Rundballenpresse verringern lässt. Schließlich sind Hydraulikmotoren für den Antrieb der Führungen vorteilhaft, da sich diese aus dem Stillstand bei Volllast anfahren lassen, wodurch die Rundballenpresse sofort einsatzbereit ist.

Für die Feldbestellung sollte die Rundballenpresse fahrbar montiert sein. Aufgrund der Bauweise der Ballenpresse eignet sich insbesondere die Verwendung eines zweiachsigen Chassis, wobei jeder Ballenkammer eine Achse zugeordnet ist. Natürlich könnten die Ballenkammern auch auf einem ein- oder mehrachsigen Chassis montiert sein, wobei sich bei der einachsigen Montage der Vorteil ergibt, dass die Ballenpresse hinter dem Zugfahrzeug im Gegensatz zu mehrachsigen Systemen wendiger ist.

Für eine hohe Effektivität und Variabilität sollten mit der Rundballenpresse Ballen mit einem Durchmesser von einschließlich 0,5 m und bis einschließlich 2,5 m herstellbar sein, so dass je nach Verwendungszweck der Ballen, deren Größe einstellbar ist.

Vorzugsweise sollten mit der Rundballenpresse die üblichen zu Ballen pressbaren Ernteerzeugnisse formbar sein. Hier sind insbesondere Silage, Heu und Stroh zu nennen. Die Rundballenpresse könnte aber auch auf Mülldeponien einsetzbar sein, um Müll über die Erntegutaufnahmeeinrichtung in die Kammern zu leiten, um daraus Rundballen für den Transport zu Verbrennungsöfen oder anderen Entsorgungsstätten zu formen.

Um das Pressgut in Form der Rundballen während des Transports und der Lagerung halten zu können, werden diese vorzugsweise mit Netzen, Garnen oder einer Folie umwickelt. Dies geschieht vorzugsweise in der nachgeschalteten Ballenkammer, die mit einer Bindeinrichtung ausgestattet ist und Garn oder Netzrollen vorrätig hält, wobei die Garn- oder Netzführung in vorteilhafter Weise schwenkbar angeordnet ist, um sich den variabel einstellbaren Durchmessern der Rundballen anpassen zu können. Es ist auch denkbar, dass der nachgeschalteten Ballenkammer eine Wickeleinrichtung nachgeschaltet ist, die den von der Ballenkammer ausgeworfenen Ballen mit Folie umwickelt.

Bezüglich der Vorteile des Verfahrens wird auf die Ausführungen zu der beanspruchten Rundballenpresse verwiesen.

Weitere Vorteile und Ausgestaltungen der Erfindung ergeben sich aus weiteren Unteransprüchen, der nachfolgenden Beschreibung und der Zeichnung. In der Zeichnung zeigt:
- Fig. 1: eine schematisch geschnittene Seitenansicht einer Rundballenpresse mit zwei variablen Ballenkammern beim Beginn der Erntegutaufnahme;
- Fig. 2: die Rundballenpresse gemäß Figur 1, bei der die vorgeschaltete Ballenkammer Erntegut durchleitet und die nachgeschaltete Ballenkammern das Erntegut zu einem Ballen dreht;
- Fig. 3: die Rundballenpresse gemäß Figur 1 und Figur 2 beim Wickelvorgang des Rundballens in der nachgeschalteten Ballenkammer und Bildung eines Ballens in der vorgeschalteten Ballenkammer;
- Fig. 4: die Rundballenpresse gemäß den vorhergehenden Figuren beim Auswurf eines Ballens aus der nachgeschalteten und aufgeklappten Kammer;
- Fig. 5: die Rundballenpresse gemäß den vorhergehenden Figuren bei Übergabe eines Ballens aus der vorgeschalteten Ballenkammer an die nachgeschaltete Ballenkammer und
- Fig. 6: die Rundballenpresse gemäß der vorhergehenden Figuren in einer alternativen Ausführungsform bei Übergabe eines Ballens aus der vorgeschalteten Ballenkammer an die nachgeschaltete Bal- lenkammer bei entgegen gesetzt laufenden Führungen.

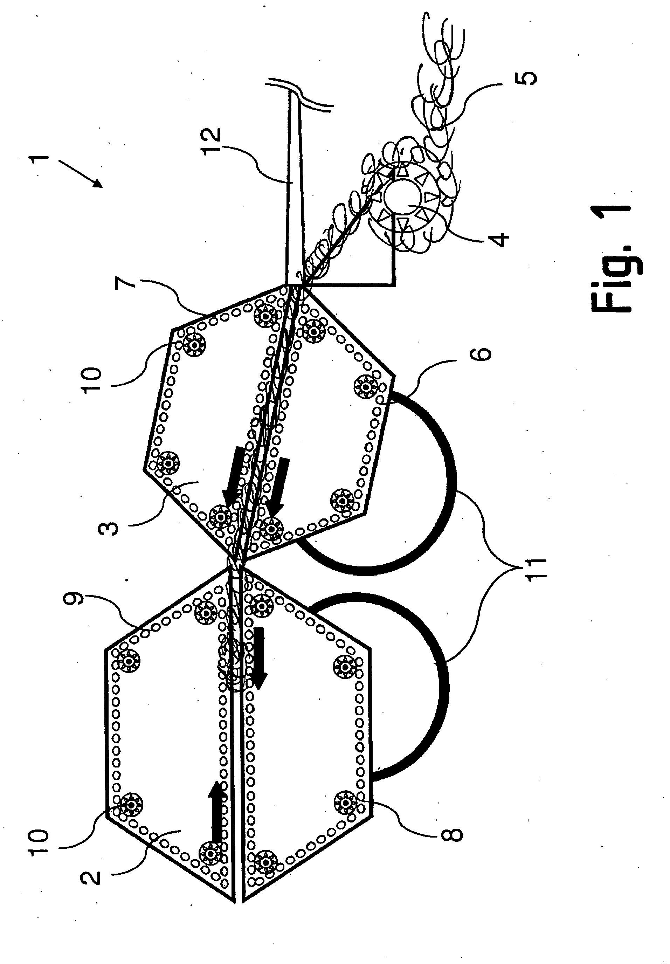

Figur 1 zeigt eine mobile Rundballenpresse 1 mit einer variablen Ballenkammer 2, wie sie beispielweise aus der DE 10 2004 023 696 B4 bekannt ist. Der variablen Ballenkammer 2 ist eine weitere Ballenkammer 3 vorgeschaltet, die einer Erntegutaufnahmeeinrichtung 4 nachgeschaltet ist, die Erntegut 5 durch Gleichlauf der unteren Führung 6 und der oberen Führung 7 durch die Ballenkammer 3 in die nachgeschaltete Ballenkammer 2 durchleitet. Jede der Ballenkammern ist auf einem einachsigen Chassis 11 angeordnet. Die Führungen 8 und 9 der nachgeschalteten Ballenkammer 2 laufen gegenläufig, um das eingeleitete Erntegut 5 zu einem Ballen zu drehen. Die Führungen 6, 7, 8 und 9 sind als Stabkettenelevatoren ausgestaltet, die über eine Kette über Umlenkrollen 10 gezogen werden. Die Rundballenpresse 1 ist an einem Schlepper oder an ein anderes Zugfahrzeug koppelbar und wird über eine Antriebswelle 12 des Schleppers oder Zugfahrzeuges angetrieben.

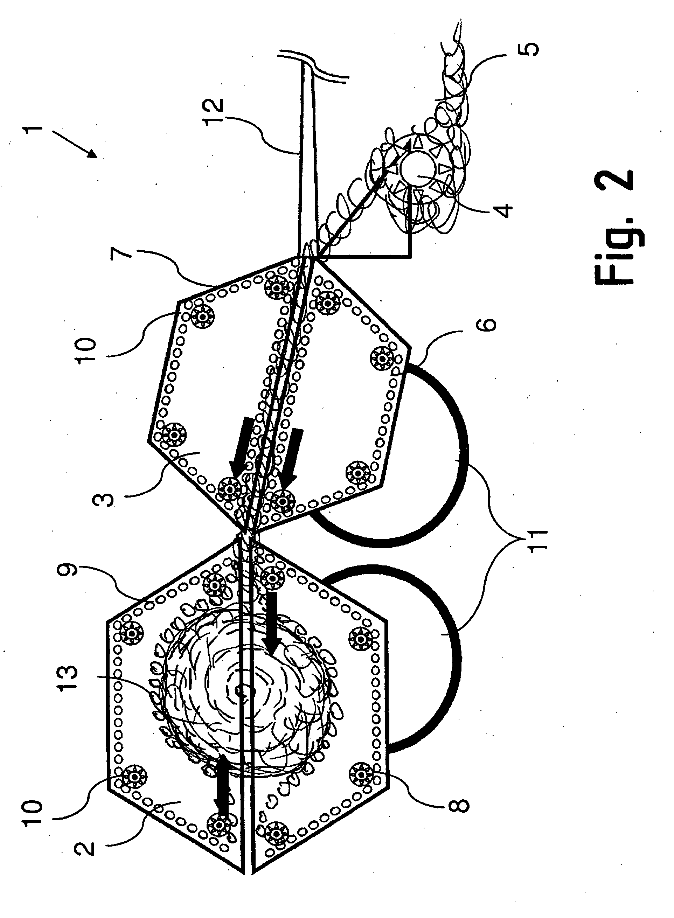

In der Figur 2 befindet sich das Drehen des Ernteguts 5 in der nachgeschalteten Ballenkammer 2 in einem fortgeschrittenen Stadium, wobei fortlaufend Erntegut von der Erntegutaufnahmeeinrichtung 4 durch die vorgeschaltete Ballenkammer 3 in die Ballenkammer 2 eingeleitet wird, und zwar bis zu dem Punkt, bis der über Stellmittel (in der Zeichnung nicht dargestellt) eingestellte Ballendurchmesser erreicht ist.

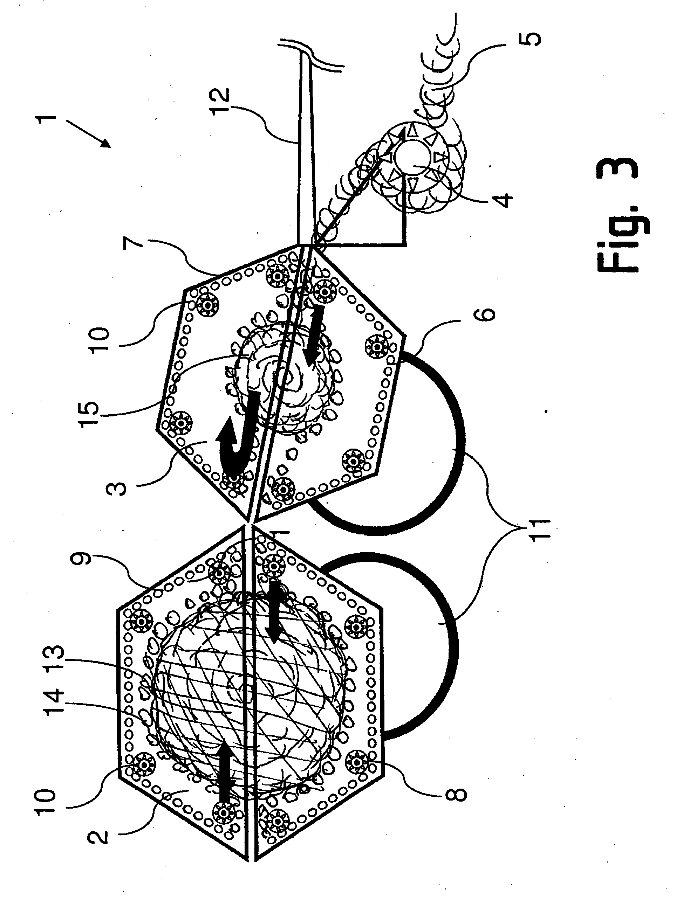

Dann beginnt, wie in Figur 3 dargestellt, der Bindevorgang des Rundballens 13, bis der Rundballen 13 vollständig mit Garn oder , wie in der Zeichnung dargestellt, mit einem Netz 14 umbunden ist. Bei Einleitung des Bindevorgangs erfährt die obere Führung 7 der vorgeschalteten Ballenkammer 3 eine Drehrichtungsänderung, vorzugsweise über einen Hydraulikmotor gesteuert, und nimmt das Erntegut 5 von der Erntegutaufnahmeeinrichtung in der Ballenkammer 3 auf und formt dieses zu einem Vorballen 15, der je nach Größe des Rundballens 13 variabel über Stellmittel einstellbar ist, nämlich auf die Größe, die einen gradlinigen Prozess der Rundballenpresse 1 erlaubt. Natürlich kann das Einleiten des Ernteguts 5 in die Ballenkammer 3 entgegen der Darstellung in Figur 3 auch durch Drehrichtungsänderung der unteren Führung 7 der vorgeschalteten Ballenkammer 3 erfolgen.

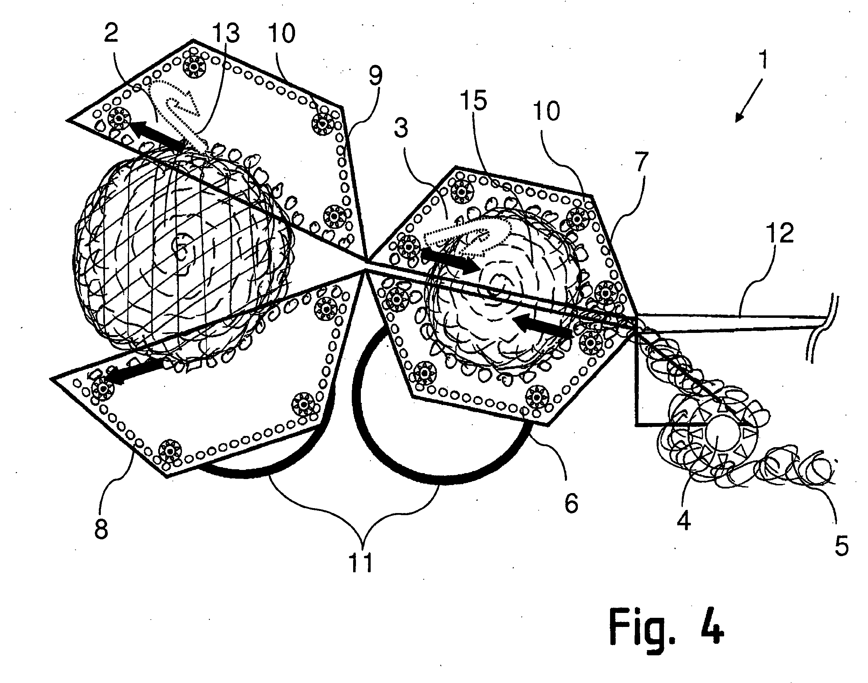

Figur 4 zeigt den Auswurf des Rundballens 13 aus der gegen Fahrtrichtung des Zugfahrzeuges aufgeklappten Ballenkammer 2 durch Gleichlauf der Führungen 8 und 9 nach Beendigung des Bindevorgangs, wobei die obere Führung 7 der vorgeschalteten Ballenkammer 3 entweder erneut eine Drehrichtungsänderung erfährt, so dass alle Führungen 6, 7, 8 und 9 die gleiche Drehrichtung haben, oder alternativ in der nach Figur 3 eingestellten Drehrichtung bleibt. Mit Auswurf des Rundballens 13 und Gleichstellung der Drehrichtung der Führungen 6, 7, 8 und 9 öffnet sich die vorgeschaltete Ballenkammer 3 zu der nachgeschalteten Ballenkammer 2.

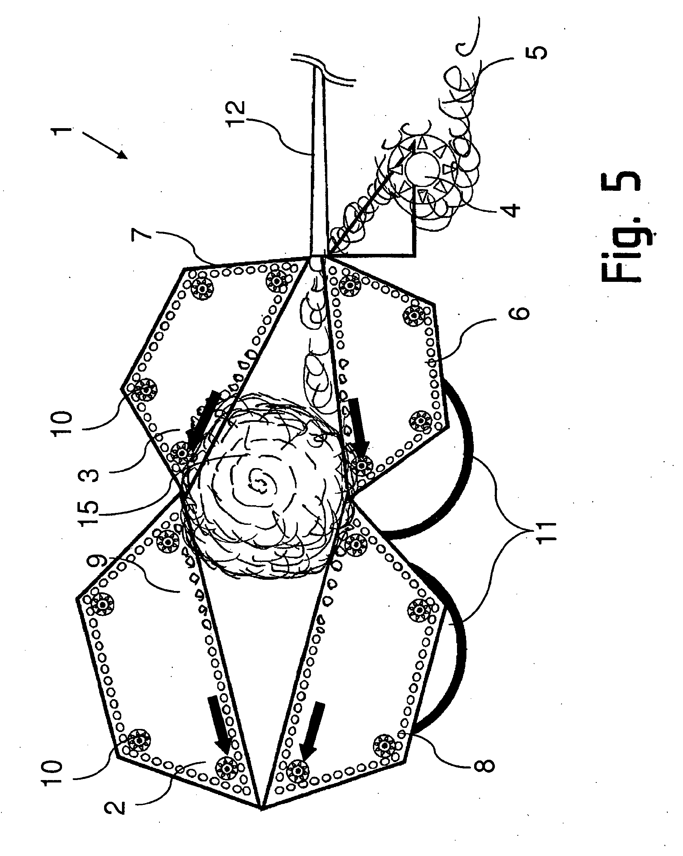

Wie in Figur 5 dargestellt öffnet sich die nachgeschaltete Ballenkammer 2 in Fahrtrichtung zu der vorgeschalteten Ballenkammer 3 und übernimmt unter Beibehaltung der Drehrichtung aller Führungen 6, 7, 8 und 9 den Vorballen 15 aus der vorgeschalteten Ballenkammer 3, wobei weiterhin in einem kontinuierlichen Fluss Erntegut 5 über die Erntegutaufnahmeeinrichtung 4 in die vorgeschaltete Ballenkammer 3 eingeleitet wird, die dieses zu der Ballenkammer 2 gleichzeitig mit dem Ballen 15 durchleitet, wodurch ein besonders gradliniger Prozess bei der Herstellung der Rundballen erfolgt.

Nach Übergabe des Vorballens 15 wird die Drehrichtung einer der beiden Führungen 8, 9 der Ballenkammer 2 geändert, so dass die Führungen 8, 9 gegenläufig laufen und der Vorballen 15 zu einem Rundballen 13 unter Einleitung von Erntegut 5, wie in Figur 1 dargestellt, durch Durchleitung von Erntegut 5 durch die Ballenkammer 3 unter Beibehaltung der gleichläufigen Drehrichtung der Führungen 6 und 7 gedreht wird.

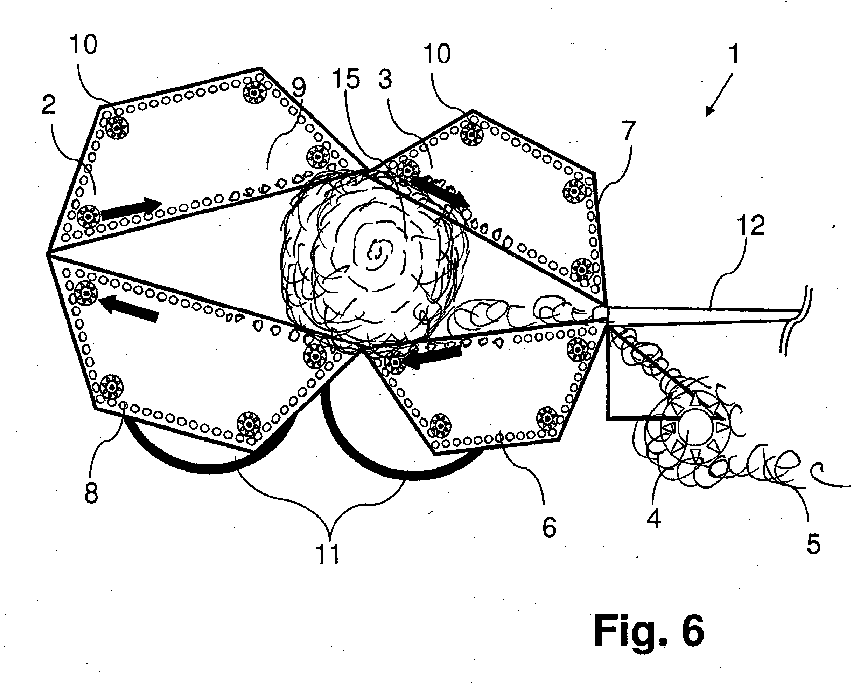

In Figur 6 ist eine alternative Übergabe des Vorballens 15 aus der vorgeschalteten Ballenkammer 3 an die nachgeschaltete Ballenkammer 2 dargestellt. Bei Einleitung des Bindevorganges erhält die obere Führung 7 der vorgeschalteten Kammer 3 (s. Figur 4) ihre Drehrichtungsänderung, so dass das eingeleitete Erntegut zu einem Ballen geformt werden kann.

Nach dem Auswurf des Rundballens 13 und der wieder aufgenommenen entgegengesetzten Drehrichtung der Führungen 8 und 9 der nachgeschalteten Ballenkammer 2 öffnet sich die vorgeschaltete Ballenkammer 3 zu der nachgeschalteten Ballenkammer 2. Dabei wird die Drehzahl der Führung 7 reduziert. Dadurch bewegt sich der Ballen in Richtung der Kammer 2. Dabei sollte auch die Führung 9 kurzzeitig die Drehzahl reduzieren, damit der Ballen sauber übergeben werden kann. Nach Übergabe des Ballens schließen sich die zueinander geöffneten Kammern wieder und die Führung 7, die drehzahlreduziert ist, ändert wieder die Drehrichtung und es entsteht ein kontinuierlicher Gutfluss in Richtung Kammer 2. Dann wird wieder die Ausgangsposition wie in Figur 1 dargestellt erreicht und der Prozess beginnt von vorne.

Es sei darauf hingewiesen, dass die Drehrichtung der Führungen auch in anderer Weise geändert werden kann. Bei Übergabe des Ballens haben die Führungen 9 und 7, wie in Figur 6 dargestellt, die gleiche Drehrichtung, und die Führung 7 ist in ihrer Drehzahl begrenzt. Denkbar wäre aber auch Gleichlauf der Führungen 6 und 8, wobei bei der Ballenübergabe die Führung 6 und eventuell die Führung 8 zur sauberen Übergabe des Ballens in der Drehzahl reduziert werden.

In ganz besonders vorteilhafter Ausgestaltung können die Drehrichtungsänderungen, also die Steuerung beispielsweise der Hydraulikmotoren und die beweglichen Stellmittel zur variablen Einstellung des Ballendurchmessers über eine Sensorik mit der Bindeinrichtung gekoppelt sein, so dass bei Beendigung des Bindvorgangs des Rundballens 13 ein Signal erfolgt, welches zur automatischen Steuerung der Drehrichtungsänderung der Führungen 6, 7, 8 und 9 und der beweglichen Stellmittel dient.

Es sei darauf hingewiesen, dass die vorgeschaltete und die nachgeschaltete Ballenkammer sich zusammen in einem Gehäuse befinden können, aber auch, wie in der Zeichnung dargestellt, die Rundballenpresse aus zwei einzelnen Ballenkammern besteht, die in Reihe geschaltet über die Antriebswelle eines Schleppers oder eines anderen Zugfahrzeuges angetrieben werden und die zueinander aufklappbar sind.

## Patentansprüche

1. Rundballenpresse (1) mit aufklappbarer variabler Ballenkammer (2) mit mindestens zwei getrennt voneinander umlaufenden Führungen (8, 9) und beweglichen Stellmitteln zum Pressen von landwirtschaftlichem Erntegut (5) zu Rundballen (13) mit wählbarem Ballendurchmesser, einer Bindeeinrichtung zum Binden der gepressten Rundballen (13) und einer der Ballenkammer (2) vorgeschalteten Erntegutaufnahmeeinrichtung (4) zum Aufnehmen des Erntegutes (5),
**dadurch gekennzeichnet, dass** der aufklappbaren variablen Ballenkammer (2) mindestens eine weitere aufklappbare variable Ballenkammer (3) mit mindestens zwei getrennt voneinander umlaufenden Führungen (6, 7) und beweglichen Stellmitteln vorgeschaltet ist, die der Erntegutaufnahmeeinrichtung (4) nachgeschaltet ist, die zum einen Erntegut (5) durch Gleichlauf der Führungen (6, 7) der vorgeschalteten Ballenkammer (3) an die nachgeschaltete Ballenkammer (2) durchleitet, und die zum -anderen durch Drehrichtungsänderung einer der mindestens zwei Führungen (6, 7) der vorgeschalteten Ballenkammer (3) Erntegut (5) in die vorgeschaltet Ballenkammer (3) einleitet und dieses zu einem Vorballen (15) dreht, und die den Vorballen (15) nach Beendigung des Pressens, des Bindens und Auswurfes eines Rundballens (13) aus der nachgeschalteten Kammer (3) durch Gleichlauf der Führungen (6, 7, 8, 9) beider Ballenkammern (2, 3) und Aufklappen der Kammern (2, 3) zueinander an die nachgeschaltete Ballenkammer (2) übergibt.

2. Rundballenpresse (1) mit aufklappbarer variabler Ballenkammer (2) mit mindestens zwei getrennt voneinander umlaufenden Führungen (8, 9)und beweglichen Stellmitteln zum Pressen von landwirtschaftlichem Erntegut (5) zu Rundballen (13) mit wählbarem Ballendurchmesser, einer Bindeeinrichtung zum Binden der gepressten Rundballen (13) u n d einer der Ballenkammer (2) vorgeschalteten Erntegutaufnahmeeinrichtung (4) zum Aufnehmen des Erntegutes (5),
**dadurch gekennzeichnet, dass** der aufklappbaren variablen Ballenkammer (2) mindestens eine weitere aufklappbare variable Ballenkammer (3) mit mindestens zwei getrennt voneinander umlaufenden Führungen (6, 7) und beweglichen Stellmitteln vorgeschaltet ist, die der Erntegutaufnahmeeinrichtung (4) nachgeschaltet ist, die zum einen Erntegut (5) durch Gleichlauf der Führungen (6, 7) d e r vorgeschalteten Ballenkammer (3) an die nachgeschaltete Ballenkammer (2) durchleitet, und die zum anderen durch Drehrichtungsänderung einer der mindestens zwei Führungen (6, 7) der vorgeschalteten Ballenkammer (3) Erntegut (5) in die vorgeschaltete Ballenkammer (3) einleitet und dieses zu einem Vorballen (15) dreht, und die den Vorballen (15) nach Beendigung des Pressens, des Bindens und Auswurfes eines Rundballens (13) aus der nachgeschalteten Kammer (2) durch Drehzahlreduzierung oder Drehzahlerhöhung einer der mindestens zwei Führungen (6, 7, 8, 9) beider Ballenkammern oder nur durch Drehzahlreduzierung oder Drehzahlerhöhung einer der mindestens zwei Führungen (6, 7) der vorgeschalteten Ballenkammer (3) und Aufklappen der Kammern (2, 3) zueinander an die nachgeschaltete Ballenkammer (2) übergibt.

3. Rundballenpresse (1) nach Anspruch 1 oder 2, **dadurch gekennzeichnet, dass** bei Drehzahländerung der Führungen (6, 8) der vorgeschalteten Ballenkammer (3) oder bei Drehzahländerung der Führungen (7, 9) der nachgeschalteten Ballenkammer (3) der Auswurf des Rundballens (13) aus der nachgeschalteten Kammer (2) und die Übergabe des Vorballens (15) aus der vorgeschalteten Kammer (3) erfolgen.

4. Rundballenpresse (1) nach einem der Ansprüche 1 bis 3, **dadurch gekennzeichnet, dass** die Drehzahl der getrennt voneinander umlaufenden Führungen (6, 7, 8, 9) der Kammern getrennt voneinander einstellbar sind, wobei die getrennt voneinander umlaufenden Führungen (6, 7, 8, 9) Stabkettenelevatoren, Endlos-Gummibänder, Walzen, Riemen oder eine Kombination aus diesen sind.

5. Rundballenpresse (1) nach einem der Ansprüche 1 bis 4, **dadurch gekennzeichnet, dass** die Drehrichtung einer der mindestens zwei Führungen (6, 7) der vorgeschalteten Ballenkammer (3) oder die Drehrichtung einer der mindestens zwei Führungen (8, 9) der nachgeschalteten Ballenkammer (3) mittels Hydraulikmotor oder mechanischen, elektrischen und pneumatischen Getrieben einstellbar ist.

6. Rundballenpresse (1) nach einem der Ansprüche 1 bis 5, **dadurch gekennzeichnet, dass** Silage, Heu und Stroh zu Ballen (13, 15) mit einem Durchmesser von 0,5 m bis 2,5 m formbar sind.

7. Rundballenpresse (1) nach einem der Ansprüche 1 bis 6, **dadurch gekennzeichnet, dass** in der Bindeeinrichtung Garn- oder Netzrollen vorrätig gehalten werden und die Garn- oder Netzführung innerhalb der Ballenkammer (2) schwenkbar angeordnet ist.

8. Rundballenpresse (1) nach einem der Ansprüche 1 bis 7, **dadurch gekennzeichnet, dass** diese an einen Schlepper oder ein anderes Zugfahrzeug koppelbar und über eine Welle (12) antreibbar ist.

9. Rundballenpresse (1) nach einem der Ansprüche 1 bis 8, **dadurch gekennzeichnet, dass** der Auswurf des mit Garn- oder Netz (14) umwickelten Ballens (13) durch Gleichrichtung der mindestens zwei getrennt voneinander umlaufenden Führungen (8, 9) durch die beim Wickeln entstehende Drehbewegung des Ballens (13) unterstützt wird.

10. Rundballenpresse (1) nach einem der Ansprüche 1 bis 9, **dadurch gekennzeichnet, dass** die Ballenkammern (2, 3) jeweils eine obere Führung (7, 10) und eine untere Führung (8, 6) aufweisen, wobei nur die Drehrichtung der unteren Führung (8, 6) veränderbar ist.

11. Rundballenpresse (1) nach einem der Ansprüche 1 bis 10, **dadurch gekennzeichnet, dass** die Ballenkammern (2, 3) eine obere Führung (7, 10) und eine untere Führung (8, 6) aufweisen, wobei nur die Drehzahl der unteren Führung (8, 6) oder der oberen Führung (9, 7) veränderbar ist.

12. Rundballenpresse (1) nach einem der Ansprüche 1 bis 11, **dadurch gekennzeichnet, dass** die nachgeschaltete Ballenkammer (3) in zwei Richtungen aufklappbar ist.

13. Verfahren zum Pressen von Rundballen mit einer Rundballenpresse nach Anspruch 1 oder einem der Ansprüchen 3 bis 12 mit zwei in Reihe geschalteten aufklappbaren variablen Ballenkammern mit beweglichen Stellmitteln und mit Hydraulikmotoren oder mechanischen, elektrischen und pneumatischen Getrieben betätigten Führungen, die einer Erntegutaufnahmeeinrichtung nachgeschaltet sind,
**dadurch gekennzeichnet, dass** die vorgeschaltete variable Ballenkammer, die der Erntegutaufnahme nachgeschaltet ist, in sich wiederholender Reihenfolge in einem
- ersten Schritt bei geschlossenen Kammern Erntegut durch Gleichlauf der Führungen an die nachgeschaltete Ballenkammer durchleitet, in einem
- zweiten Schritt nach Befüllung der nachgeschalteten Ballenkammer mit Erntegut durch Drehrichtungsänderung einer der mindestens zwei Führungen Erntegut in der Kammer aufnimmt und dieses zu einem Vorballen dreht, und in einem
- dritten Schritt den Vorballen nach Beendigung des Pressens, des Bindens, Aufklappens und Auswurfes eines Rundballens aus der nachgeschalteten Ballenkammer durch Gleichlauf und Drehzahländerung der Führungen beider Ballenkammern und zueinander Aufklappen der Ballenkammern an die nachgeschaltete Kammer übergibt,
und zurückkehrend zum ersten Schritt bei geschlossenen Ballenkammern das Erntegut unter Beibehaltung der Laufrichtung und unter Drehzahländerung der Führungen an die nachgeschaltete Ballenkammer durchleitet, die durch Drehrichtungsänderung einer der mindestens zwei Führungen, den Vorballen bis zum durch die Stellmittel vorgewählten Ballendurchmesser formt, presst und unter Beibehaltung der gegenläufigen Drehrichtung der Führungen mit Garn oder einem Netz umbindet.

14. Verfahren nach Anspruch 13, **dadurch gekennzeichnet, dass** die beweglichen Stellmittel, die Hydraulikmotoren oder die mechanischen, elektrischen und pneumatischen Getriebe der der Ballenkammer mit Bindeeinrichtung vorgeschalteten Ballenkammer über eine Sensorik mit der Bindeeinrichtung gekoppelt sind, und mit der Sensorik die Beendigung des Bindevorgangs durch Durchtrennen des Garns oder des Netzes ermittelt wird, und die Änderung der Drehrichtung oder der Drehzahl der mindestens einen Führung und die beweglichen Stellmittel automatisch gesteuert werden.

## Claims

1. Round baler (1) with hinged variable bale chamber (2) with at least two from each other separated circumferential guidings (8, 9) and movable setting means for pressing agricultural crop (5) to round bales (13) with selectable bale diameter, a bandage device to tie the pressed round bales (13) and upstreamed to the bale chamber (2) a crop receiving device (4) for receiving the crop (5),
**characterized in that** upstreamed to the hinged variable bale chamber (2) there is at least a further hinged variable bale chamber (3) with at least two separated from each other circumferential guidings (6, 7) and movable setting means, which is downstreamed to the crop receiving device (4), which on the hand passes crop (5) to the downstreamed bale chamber (2) by a synchronous run of the guidings (6, 7) of the upstreamed bale chamber (3) and on the other hand by changing the rotating direction of at least one of the two guidings (6, 7) of the upstreamed bale chamber (3) inserts crop (5) in the upstreamed bale chamber (3) and rotates it to a pre bale (15), and which transmits the pre bale (15) after completion of pressing, tying and ejection of a round bale (13) out of the downstreamed chamber (3) to the downstreamed bale chamber (2) by a synchronous run of the guidings (6, 7, 8, 9) of both bale chambers (2, 3) and by opening the chambers (2, 3) to each other.

2. Round baler (1) with hinged variable bale chamber (2) with at least two from each other separated circumferential guidings (8, 9) and movable setting means for pressing agricultural crop (5) to round bales (13) with selectable bale diameter, a bandage device to tie the pressed round bales (13) and upstreamed to the bale chamber (2) a crop receiving device (4) for receiving the crop (5),
**characterized in that** upstreamed to the hinged variable bale chamber (2) there is at least a further hinged variable bale chamber (3) with at least two separated from each other circumferential guidings (6, 7) and movable setting means, which is downstreamed to the crop receiving device (4), which on the hand passes crop (5) to the downstreamed bale chamber (2) by a synchronous run of the guidings (6, 7) of the upstreamed bale chamber (3) and on the other hand by changing the rotating direction of at least one of the two guidings (6, 7) of the upstreamed bale chamber (3) inserts crop (5) in the upstreamed bale chamber (3) and rotates it to a pre bale (15), and which transmits the pre bale (15) after completion of pressing, tying and ejection of a round bale (13) out of the downstreamed chamber (2) to the downstreamed bale chamber (2) by decreasing or increasing the rotational speed of one of the at least two guidings (6, 7, 8, 9) of both bale chambers or only by decreasing the rotational speed of at least one of the two guidings (6, 7) of the upstreamed bale chamber (3) and by opening the chambers (2, 3) to each other.

3. Round baler (1) as claimed in claim 1 or 2, **characterized in that** by change of the rotational speed of the guidings (6, 8) of the upstreamed bale chamber (3) or by change of the rotational speed of the guidings (7, 9) of the downstreamed bale chamber (3) the ejection of the round bale (13) out of the downstreamed chamber (2) and the transmission of the pre bale (15) out of the upstreamed chamber (3) occurs.

4. Round baler (1) as claimed in claim 1 to 3, **characterized in that** the rotational speed of the from each other separated circumferential guidings (6, 7, 8, 9) of the chambers are from each other separately adjustable, wherein the from each other separated circumferential guidings (6, 7, 8, 9) are bar chain elevators, endless elastic bands, rollings, belts or a combination of these.

5. Round baler (1) as claimed in claim 1 to 4, **characterized in that** the direction of rotation of at least one of the two guidings (6, 7) of the upstreamed bale chamber (3) or the rotating direction of at least one of the two guidings (8, 9) of the downstreamed bale chamber (3) is adjustable by hydraulic engine or mechanic, electric and pneumatic gears.

6. Round baler (1) as claimed in claim 1 to 5, **characterized in that** silage, hay and straw is shapeable to bales (13, 15) with a diameter of 0.5 m to 2.5 m.

7. Round baler (1) as claimed in claim 1 to 6, **characterized in that** yarn reels or net reels are in stock of the bandage device and the yarn or net guide is arranged slewable in the bale chamber (2).

8. Round baler (1) as claimed in claim 1 to 7, **characterized in that** it is coupleable to a tractor or another towing vehicle and drivable by an axle (12).

9. Round baler (1) as claimed in claim 1 to 8, **characterized in that** the ejection of the bale (13) surrounded by yarn or net (14) is supported by a synchronous run of at least two from each other separated guidings (8, 9) by the rotary movement of the bale (13) during wrapping.

10. Round baler (1) as claimed in claim 1 to 9, **characterized in that** each bale chamber (2, 3) comprises an upper guiding (7, 10) and a lower guiding (8, 6), wherein only the rotating direction of the lower guiding (8, 6) is variable.

11. Round baler (1) as claimed in claim 1 to 10, **characterized in that** the bale chambers (2, 3) comprises an upper guiding (7, 10) and a lower guiding (8, 6), wherein only the rotating speed of rotation of the lower guiding (8, 6) or of the upper guiding (9, 7) is variable.

12. Round baler (1) as claimed in claim 1 to 11, **characterized in that** the downstreamed bale chamber (3) is hinged in two directions.

13. Method for pressing round bales with an round baler as claimed in claim 1 or one of the claims 3 to 12 with two in series connected hinged variable bale chambers with moveable setting means and with hydraulic engines or mechanic, electric and pneumatic gears operated guidings which are downstreamed to a crop receiving device,
**characterized in that** the upstreamed variable bale chamber which is downstreamed to the crop receiving in repetitive order in a
- First step with closed chambers crop is transmitted to the downstreamed bale chamber by a synchronous run of the guidings, in a
- Second step after filling the downstreamed bale chamber with crop, crop is entered in the chamber and rotated to a pre bale by changing the rotating direction of at least one of the two guidings, and in a
- Third step transmission of the pre bale after completion of pressing, tying, opening and ejection of a round bale out of the downstreamed bale chamber to the downstreamed chamber by a synchronous run and by variation of rotation speed of the guidings of both bale chambers and by opening the bale chambers to each,
and returning to the first step with closed bale chambers the crop is transmitted to the downstreamed bale chamber by retention of the running direction and by variation of the rotating speed of the guidings, which by variation of the running direction of one of the at least two guidings shapes and presses the bale up to the with the setting means predefined bale diameter and with retention of the contra directional running direction of the guidings wraps the bale with yarn or an net.

14. Method as claimed in claim 13, **characterized in that** the moveable setting means, the hydraulic engines or the mechanic, electric and pneumatic gears of the bale chamber upstreamed to the bale chamber with the bandage device is coupled to the bandage device by sensors, and with the sensors the completion of the tie process by serving the yarn or the net is determined, and the change of the rotating direction or the rotating speed of the at least one guiding and the movable setting means are automatically controlled.

## Revendications

1. Presse à balles rondes (1) avec une chambre à balles (2) variable dépliable avec au moins deux guides (8, 9) périphériques séparés l'un de l'autre et des moyens de réglage mobiles pour comprimer de la récolte agricole (5) en balles rondes (13) avec un diamètre de balle au choix, un dispositif de cerclage pour cercler les balles rondes comprimées (13) et un dispositif de réception de récolte (4) en amont de la chambre à balles (2) pour recevoir la récolte (5),
**caractérisé en ce qu'**au moins une autre chambre à balles (3) variable dépliable est montée en amont de la chambre à balles (2) variable dépliable, avec au moins deux guides (6, 7) périphériques séparés l'un de l'autre et des moyens de réglage mobiles, laquelle est montée en aval du dispositif de réception de récolte (4), transfère d'une part de la récolte (5) à la chambre à balles (2) montée en aval par synchronisme des guides (6, 7) de la chambre à balles (3) montée en amont, et qui d'autre part, par changement de la direction de rotation de l'un des au moins deux guides (6, 7) de la chambre à balles (3) montée en amont introduit de la récolte (5) dans la chambre à balles (3) montée en amont et tourne celle-ci en une pré-balle (15), et qui transmet la pré-balle (15) à la chambre à balles (2) montée en aval à la fin de la compression, du cerclage et l'éjection d'une balle ronde (13) de la chambre à balles (3) montée en aval par synchronisme des guides (6, 7, 8, 9) des deux chambres à balles (2, 3) et ouverture des chambres (2, 3) ensemble.

2. Presse à balles rondes (1) avec une chambre à balles (2) variable dépliable avec au moins deux guides (8, 9) périphériques séparés l'un de l'autre et des moyens de réglage mobiles pour comprimer de la récolte agricole (5) en balles rondes (13) avec un diamètre de balle au choix, un dispositif de cerclage pour cercler les balles rondes comprimées (13) et un dispositif de réception de récolte (4) en amont de la chambre à balles (2) pour recevoir la récolte (5),
**caractérisé en ce qu'**au moins une autre chambre à balles (3) variable dépliable est montée en amont de la chambre à balles (2) variable dépliable, avec au moins deux guides (6, 7) périphériques séparés l'un de l'autre et des moyens de réglage mobiles, laquelle est montée en aval du dispositif de réception de récolte (4), transfère d'une part de la récolte (5) à la chambre à balles (2) montée en aval par synchronisme des guides (6, 7) de la chambre à balles (3) montée en amont, et qui d'autre part, par changement de la direction de rotation de l'un des au moins deux guides (6, 7) de la chambre à balles (3) montée en amont introduit de la récolte (5) dans la chambre à balles (3) montée en amont et tourne celle-ci en une pré-balle (15), et qui transmet la pré-balle (15) à la chambre à balles (2) montée en aval à la fin de la compression, du cerclage et de l'éjection d'une balle ronde (13) de la chambre à balles (2) montée en aval par réduction de la vitesse de rotation ou augmentation de la vitesse de rotation de l'un des au moins deux guides (6, 7, 8, 9) des deux chambres à balles ou que par réduction de la vitesse de rotation ou augmentation de la vitesse de rotation de l'un des au moins deux guides (6, 7) de la chambre à balles (3) montée en amont et ouverture des chambres (2, 3) ensemble.

3. Presse à balles rondes (1) selon la revendication 1 ou 2, **caractérisée en ce que** l'éjection de la balle ronde (13) de la chambre à balles (2) montée en aval et le transfert de la pré-balle (15) de la chambre à balles (3) montée en amont se produisent lors d'un changement de la vitesse de rotation des guides (6, 8) de la chambre à balles (3) montée en amont ou lors d'un changement de la vitesse de rotation des guides (7, 9) de la chambre à balles (2) montée en aval.

4. Presse à balles rondes (1) selon l'une des revendication 1 à 3, **caractérisée en ce que** la vitesse de rotation des guides (6, 7, 8, 9) périphériques séparés l'un de l'autre des chambres peuvent être réglées séparément l'une de l'autre, les guides (6, 7, 8, 9) périphériques séparés l'un de l'autre étant des élévateurs à chaîne à barettes, des tapis de caoutchouc sans fin, des rouleaux, des courroies ou une combinaison de ceux-ci.

5. Presse à balles rondes (1) selon l'une des revendication 1 à 4, **caractérisée en ce que** la direction de rotation de l'un des au moins deux guides (6, 7) de la chambre à balles (3) montée en amont ou la direction de rotation de l'un des au moins deux guides (8, 9) de la chambre à balles (3) montée en aval est réglable au moyen d'un moteur hydraulique ou de transmissions mécaniques, électriques et pneumatiques.

6. Presse à balles rondes (1) selon l'une des revendications 1 à 5, **caractérisée en ce que** de l'ensilage, du foin et de la paille peuvent être formés en balles (13, 15) d'un diamètre de 0,5 m à 2,5 m.

7. Presse à balles rondes (1) selon l'une des revendications 1 à 6, **caractérisée en ce que** des rouleaux de fil ou de filet sont maintenus en réserve dans le dispositif de cerclage et le guidage de fil ou de filet est agencé de manière pivotante à l'intérieur de la chambre à balles (2).

8. Presse à balles rondes (1) selon l'une des revendications 1 à 7, **caractérisée en ce que** celle-ci peut être couplée à un tracteur ou un autre véhicule de traction et peut être entraînée par un arbre (12).

9. Presse à balles rondes (1) selon l'une des revendications 1 à 8, **caractérisée en ce que** l'éjection de la balle (13) enroulée avec du fil ou un filet (14) est soutenue par synchronisme des au moins deux guides (8, 9) périphériques séparés l'un de l'autre par le mouvement de rotation de la balle (13) se produisant lors de l'enroulement.

10. Presse à balles rondes (1) selon l'une des revendications 1 à 9, **caractérisée en ce que** les chambres à balles (2, 3) présentent respectivement un guide supérieur (7, 10) et un guide inférieur (8, 6), seule la direction de rotation du guide inférieur (8, 6) pouvant être changée.

11. Presse à balles rondes (1) selon l'une des revendications 1 à 10, **caractérisée en ce que** les chambres à balles (2, 3) présentent respectivement un guide supérieur (7, 10) et un guide inférieur (8, 6), seule la vitesse de rotation du guide inférieur (8, 6) ou du guide supérieur (9, 7) pouvant être changée.

12. Presse à balles rondes (1) selon l'une des revendications 1 à 11, **caractérisée en ce que** la chambre à balles (3) montée en aval est dépliable dans deux directions.

13. Procédé pour presser des balles rondes avec une presse à balles rondes selon la revendication 1 ou l'une des revendications 3 à 12 avec deux chambres à balles variables dépliables montées en série, avec des moyens de réglage mobiles et des guides actionnés par des moteurs hydrauliques ou des transmissions mécaniques, électriques et pneumatiques, qui sont agencés en aval d'un dispositif de réception de récolte agricole,
**caractérisé en ce que** la chambre à balles variable montée en amont, qui est montée en aval de la réception de récolte, dans une suite répétitive,
- transfère de la récolte dans la chambre à balles montée en aval par synchronisme des guides au cours d'une première étape avec les chambres fermées,
- au cours d'une deuxième étape, après remplissage de la chambre à balles montée en aval avec de la récolte, reçoit de la récolte dans la chambre et tourne celle-ci en une pré-balle par changement de direction de rotation de l'un des aux moins deux guides et
- au cours d'une troisième étape après la fin de la compression, du cerclage, l'ouverture et l'éjection d'une balle ronde de la chambre à balles montée en aval, transmet la pré-balle à la chambre à balles montée en aval par synchronisme et changement de vitesse de rotation des guides des deux chambres à balles et ouverture des chambres à balles ensemble,
et revenant à la première étape avec des chambres à balles fermées, transfère la récolte, en conservant la direction de marche et par changement de vitesse des guides, à la chambre à balles montée en aval qui par changement de la direction de rotation d'un des aux moins deux guides forme, presse la pré-balle jusqu'au diamètre de balle présélectionné par les moyens de réglage et la cercle avec du fil ou un filet en maintenant la direction de rotation opposée.

14. Procédé selon la revendication 13, **caractérisé en ce que** les moyens de réglage mobiles, les moteurs hydrauliques ou les transmissions mécaniques, électriques et pneumatiques de la chambre à balles montée en amont de la chambre à balles avec dispositif de cerclage, sont couplés au dispositif de cerclage par un capteur et, la fin de la procédure de cerclage par séparation du fil ou du filet est calculée avec le capteur, et le changement de la direction de rotation ou de la vitesse de rotation de l'au moins un guide et les moyens de réglage mobiles sont commandés automatiquement.
